# EUROPEAN PATENT APPLICATION

(11) **EP 4 664 732 A1**
(43) Date of publication of application: **17.12.2025**
(21) Application number: 25181343.2
(22) Date of filing: 06.06.2025
(51) Int. Cl.: H02K 11/40, H01R 39/12

(54) **SHAFT GROUNDING RING**

(30) Priority: 13.06.2024 KR 20240076871; 10.01.2025 KR 20250004191
(71) Applicant: Dgenx Co., Ltd., Chungcheongnam-do 31413 (KR)
(72) Inventor: HAN, In Su, 31113 Cheonan-si, Chungcheongnam-do (KR); PARK, Sung Hyun, 31050 Cheonan-si, Chungcheongnam-do (KR); KIM, Deok Kyu, 31181 Cheonan-si, Chungcheongnam-do (KR); KANG, Yeon Hwa, 31163 Cheonan-si, Chungcheongnam-do (KR)
(74) Representative: Krauns, Christian

(57) **Abstract**

Proposed is a shaft grounding ring including an annular housing having a first through hole in a central portion thereof through which a motor shaft passes in a front-back direction, and having brush mounting grooves arranged radially on a front thereof, a plurality of grounding brushes respectively inserted into the brush mounting grooves of the housing, and an elastic end of which is in electrical contact with an outer circumferential surface of the motor shaft, and an annular cover coupled to the housing with the grounding brushes in between to fix the grounding brushes, having a second through hole in a central portion thereof in a front-back direction, which communicates with the first through hole and through which the motor shaft passes, and having radially arranged pin holes drilled in the front-back direction so that contact pins of a pressing jig penetrate and contact the front of the housing.

## Description

### CROSS REFERENCE TO RELATED APPLICATION

The present application claims priority to Korean Patent Application No. 10-2024-0076871, filed June 13, 2024 and No. 10-2025-0004191, filed January 10, 2025, the entire contents of which is incorporated herein for all purposes by this reference.

### BACKGROUND

### Technical Field

The present disclosure relates to a shaft grounding ring that discharges shaft currents to ground to prevent damage to motor bearings caused by the shaft currents induced on a motor shaft of a driving motor, and a pressing jig used when installing the shaft grounding ring by pressing the shaft grounding ring to a motor housing of the driving motor. More particularly, the present disclosure relates to a shaft grounding ring for electric vehicle driving motors which can be easily and stably installed while preventing grounding brushes from being deformed or damaged during the process of press-fitting and mounting the shaft grounding ring on a motor housing of a driving motor.

### Description of the Related Art

A driving motor of an electric vehicle is an electronic unit responsible for generating driving force using electricity. A reducer is mounted to a shaft of the driving motor, and the motor receives electrical signals from the motor control unit (MCU) to generate appropriate torque to drive the wheels.

Due to the nature of the driving motor using a variable frequency drive (VFD) system that controls speed by varying the frequency and voltage of its power supply, common-mode (CM) voltage is produced by the ultra-fast switching operation of a pulse width modulation (PWM) inverter, which is induced to a motor shaft by parasitic capacitances, and the so-called electrical discharge machining (EDM) occurs between bearings supporting the motor shaft, causing an electric arc due to displacement current.

Generally, the electric arc causes bearing electro-corrosion such as fusion craters, pitting, frosting, and fluting, resulting in premature damage and failure of bearings supporting the motor shaft and shortening their lifespan.

In an attempt to solve this problem, a so-called shaft grounding ring (SGR), which attracts induced current with a resistance smaller than that of a bearing supporting a motor shaft and grounds the induced current, is mounted around the motor shaft.

For example, Patent Document 1 discloses "SHAFT GROUNDING DEVICE, MANUFACTURING METHOD AND APPLICATION THEREOF".

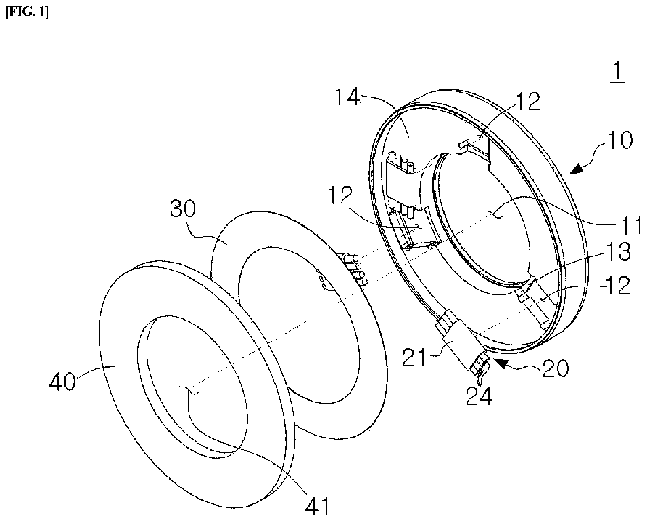

As shown in FIG. 1, a conventional shaft grounding ring includes: a ring-shaped flange 10 in which a first opening 11 through which a shaft of a driving motor passes is formed in the center thereof, and having a plurality of first grooves 12 radially formed for inserting a ground portion 20; the ground portion 20 inserted into the first grooves 12 to come in contact with the shaft of the driving motor, and made of several strands of carbon fiber filament; a ring-shaped cover 40 with a third opening 41 through which the shaft of the driving motor penetrates is formed in the center thereof, and coupled to the flange 10; and a ring-shaped adhesive portion 30 coupled between the flange 10 and the cover 40.

However, such a conventional shaft grounding ring has limitations in that the electrical conductivity of the material used for the ring is low and the ring cannot easily respond to changes in shaft diameter.

In addition, because the structure uses the adhesive portion 30 to bond the flange 10 and the cover 40, productivity is significantly reduced.

Moreover, in the process of press-fitting and mounting the shaft grounding ring into a mounting hole of a motor housing, the ground portion 20 made of several strands of carbon fiber filament is pressed by the cover 40 and is easily deformed and damaged. As a result, grounding performance deteriorates.

It should be noted that the background or conventional technology described above herein refers to information possessed by the present inventor or acquired in the process of deriving and completing the present disclosure, which is merely stated to help understand the technical significance of the present disclosure and to be useful in related art search and examination. Reference numerals used in describing the conventional technology are unrelated to those in the present disclosure.

### Document of Related Art

(Patent Document 1) Korean Patent No. 10-2576489 (Registered September 05, 2023)
(Patent Document 2) Korean Patent No. 10-2573281 (Registered August 28, 2023)
(Patent Document 3) Korean Patent No. 10-2471033 (Registered November 22, 2022)
(Patent Document 4) Korean Patent No. 10-2474503 (Registered December 01, 2022)

### SUMMARY

Accordingly, the present inventor, comprehensively considering all of the above-mentioned matters and with the idea of solving the technical limitations and problems of the conventional shaft grounding ring, made great efforts to develop a shaft grounding ring of a new structure for electric vehicle driving motors, in which carbon fiber grounding brushes make stable surface contact around a shaft of a driving motor to cause a uniform current distribution, which is used to safely discharge shaft currents induced on the driving motor shaft to ground, which allows for simple and easy assembly between components while maintaining the assembled state more firmly, and which can be easily and stably installed while preventing the carbon fiber grounding brushes from being deformed or damaged during installation by press-fitting the shaft grounding ring into a mounting part of a motor housing using a pressing jig, and as a result, devised the present disclosure.

Therefore, an objective of the present disclosure is intended to provide a shaft grounding ring that allows grounding brushes to make stable surface contact around a motor shaft to cause a uniform current distribution.

Another objective of the present disclosure is intended to provide a shaft grounding ring that prevents grounding brushes from being deformed or damaged during the process of press-fitting the shaft grounding ring into a mounting part of a motor housing.

Objectives of the present disclosure are not limited to the objectives mentioned above, and other objectives not mentioned will be clearly understood by those skilled in the art from the description below.

Specific means according to an aspect of the present disclosure for effectively achieving a specific objective while embodying a new idea for solving the technical problems of the present disclosure as described above proposes a shaft grounding ring characterized by employing: an annular housing having a first through hole in a central portion thereof through which a motor shaft passes in a front-back direction, and having brush mounting grooves arranged radially on a front thereof; a plurality of grounding brushes respectively inserted into the brush mounting grooves of the housing, and an elastic end of which is in electrical contact with an outer circumferential surface of the motor shaft; and an annular cover coupled to the housing with the grounding brushes in between to fix the grounding brushes, having a second through hole in a central portion thereof in a front-back direction, which communicates with the first through hole and through which the motor shaft passes, and having radially arranged pin holes drilled in the front-back direction so that contact pins of a pressing jig penetrate and contact the front of the housing.

As a result, the shaft grounding ring of the present disclosure may be installed easily and stably while preventing deformation and damage of the carbon fiber grounding brushes during the process of press-fitting and mounting the shaft grounding ring on a mounting part of a motor housing using the pressing jig.

In addition, in a preferred aspect of the present disclosure, one of the pin holes of the cover may be integrally formed with an open hole that extends from a center to an end of an inner edge thereof so that a positioning protrusion that determines a fastening position of the pressing jig is inserted, and a positioning groove may be formed in the housing to communicate with the open hole. As a result, by attaching the shaft grounding ring to the pressing jig quickly and accurately, the shaft grounding ring may be mounted on the mounting part of the motor housing more conveniently and efficiently, increasing the efficiency of assembly work.

In addition, in a preferred aspect of the present disclosure, the housing may have a first coupling surface on an inner edge of the front thereof, have a narrow and long slot groove in a circular shape on an outer edge of the first coupling surface, have the brush mounting grooves arranged radially on the first coupling surface, and have a second coupling surface on an inner edge of a back thereof.

In addition, each of the grounding brushes may be made by neatly gathering several long, thin carbon fiber filaments, putting the filaments in a crimp tube, and pressing the filaments together, so that the grounding brushes are elastic in themselves.

In addition, the cover may have a shrink flange on an outer edge thereof to fit into the slot groove, have first stretch flanges inserted into the first through hole of the housing are arranged radially on an inner circumference of the second through hole, and have a second stretch flange that bends an end of each of the first stretch flanges that penetrate the first through hole of the housing outward to bring the first stretch flanges into close contact with the first coupling surface of the housing.

Hereby, the present disclosure minimizes the influence of the motor shaft's rotation speed, temperature, pressure, vibration, etc. because the carbon fiber grounding brushes stably make surface contact around the motor shaft to cause a uniform current distribution, and achieves the effect of safely discharging shaft currents induced on the motor shaft to ground.

In addition, in a preferred aspect of the present disclosure, a bonding agent of either epoxy resin or ultraviolet curable unsaturated polyester resin may be applied to an end of the each of the grounding brushes located opposite to a part of the each of the grounding brushes that is in electrical contact with the outer circumferential surface of the motor shaft, and the bonding agent may be cured to prevent the carbon fiber filaments from falling out of the crimp tube.

In addition, in a preferred aspect of the present disclosure, a locking protrusion is provided in each of the brush mounting grooves of the housing to prevent the grounding brushes from being separated in a direction of gravity, thereby minimizing wear and deformation, preventing vibration and noise, and improving current density and grounding performance.

In addition, in a preferred aspect of the present disclosure, the carbon fiber filaments are provided with a length of an opposite part protruding shorter than a length of a part electrically contacting the outer circumferential surface of the shaft of the driving motor, based on the crimp tube, and a bonding agent of either epoxy resin or ultraviolet curable unsaturated polyester resin may be applied to ends of the filaments located opposite to a part that is in electrical contact with the outer circumferential surface of the motor shaft, and the bonding agent may be cured to prevent the carbon fiber filaments from falling out of the crimp tube when the filaments contact the rotating driving motor shaft.

In addition, in a preferred aspect of the present disclosure, the pressing jig may be provided with, on a surface thereof facing a front of the cover, an attachment surface having an outer diameter smaller than or equal to an outer diameter of the cover, the contact pins may protrude from an edge of the attachment surface and may be arranged radially at regular intervals, and a magnet that magnetically attracts the cover may be arranged between the contact pins and protrudes lower than the contact pins, wherein a circular plate configured to be inserted into the second through hole of the cover may protrude at a center of the attachment surface, and on an edge of the circular plate, interference prevention grooves may be formed radially arranged to prevent contact interference with the grounding brushes. As a result, the contact pins may be attached quickly, accurately, and stably without shaking while penetrating the pin holes of the cover and in contact with the front of the housing, so that in the process of installing the shaft grounding ring by press-fitting the shaft grounding ring into the mounting part of the motor housing, the cover is prevented from being pressed together, thereby preventing deformation and damage to the carbon fiber grounding brushes.

According to an embodiment that implements the technical idea on which the unique solution is based to solve the technical problems of the present disclosure, a shaft grounding ring can be easily and stably mounted by press-fitting the shaft grounding ring into a mounting part of a motor housing using a pressing jig, and carbon fiber grounding brushes can be prevented from being deformed or damaged in the process.

That is, since contact pins of the pressing jig penetrate pin holes of a cover and contact the front of the housing while the pressing jig is kept at a certain distance from the cover, it is possible to prevent deformation and damage to the carbon fiber grounding brushes due to pressure on the cover, thereby preventing a decrease in current density, grounding performance, and efficiency.

Furthermore, the carbon fiber grounding brushes stably make surface contact around a motor shaft, causing a uniform current distribution and providing a low impedance path to ground, thereby minimizing the influence of the motor shaft's rotation speed, temperature, pressure, vibration, etc. In addition, protection effects such as preventing electro-corrosion of bearings can be achieved by safely and efficiently diverting shaft currents induced on the motor shaft to ground.

Furthermore, unlike the conventional case, assembly between components is simple and easy without joining processes such as welding or bolting, which can improve productivity.

In addition, by maintaining the assembled state between components more firmly and stably, it is possible to reliably prevent the grounding brushes from being separated even when subjected to external force while attached to the motor housing of the driving motor.

Furthermore, by applying a bonding agent of either epoxy resin or ultraviolet curable unsaturated polyester resin to the ends of carbon fiber filaments located opposite to the part of the grounding brush that is in electrical contact with the outer circumferential surface of the motor shaft, and curing the bonding agent, it is possible to prevent the carbon fiber filaments from easily falling out of a crimp tube when the filaments contact the rotating motor shaft.

The effects of the present disclosure are not limited to those mentioned above, and other effects not mentioned may be clearly understood by those skilled in the art from the description of the claims.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is an exploded perspective view of a shaft grounding ring according to an embodiment of the present disclosure;
FIG. 2 is a perspective view showing a shaft grounding ring according to an embodiment of the present disclosure;
FIG. 3 is an exploded perspective view showing a shaft grounding ring according to an embodiment of the present disclosure when viewed from the front;
FIG. 4 is a front view showing a shaft grounding ring according to an embodiment of the present disclosure;
FIG. 5 is an enlarged cross-sectional view showing the section from A to A' in FIG. 4;
FIG. 6 is an enlarged cross-sectional view showing the section from B to B' in FIG. 4;
FIG. 7 is an enlarged perspective view showing a grounding brush constituting a shaft grounding ring according to an embodiment of the present disclosure;
FIG. 8 is a front cross-sectional view showing a state in which a shaft grounding ring is installed on a motor shaft of a driving motor according to an embodiment of the present disclosure;
FIG. 9 is a perspective view showing a shaft grounding ring according to an embodiment of the present disclosure and a pressing jig used to press and install the shaft grounding ring to a motor housing of the driving motor; and
FIG. 10 is a cross-sectional view to help understand the process of pressing and mounting the shaft grounding ring to the motor housing of the driving motor using the pressing jig according to an embodiment of the present disclosure.

### DETAILED DESCRIPTION

Hereinafter, embodiments according to the present disclosure will be described in more detail with reference to the attached drawings.

Prior to this, it should be clarified that the terms described below are defined in consideration of the functions thereof in the present disclosure, and should be interpreted as concepts consistent with the technical idea of the present disclosure and meanings commonly used or commonly recognized in the relevant technical field.

In addition, when it is determined that a detailed description of a known function or configuration related to the present disclosure may obscure the gist of the present disclosure, the detailed description will be omitted.

The drawings attached herein may be shown with exaggerated or simplified portions for the purpose of the configuration of the technology, explanation of the operation and operating principle of the technology, convenience of understanding, clarity of the technology, etc., and each component on the drawing does not exactly match the actual size and shape thereof.

In this specification, the term and/or is meant to include a combination of a plurality of related listed items or any of a plurality of related listed items, and when it is said that a part includes a certain component, this does not mean excluding other components, but may include other components, unless specifically stated to the contrary.

That is, it should be understood that in this specification, terms such as "comprise (include)", "have", etc. used in this specification mean the presence of features, numbers, steps, processes, operations, components, parts, or a combination thereof, but do not exclude the presence or addition of one or more other features, numbers, steps, processes, operations, components, parts, or combinations thereof.

Terms such as top, bottom, upper surface, lower surface, or upper, lower, above, below, front and back, left and right used in the present disclosure are used for convenience to distinguish the relative positions of each component or to describe the direction of movement. For example, the upper part of the drawing may be referred to as upper and the lower part as lower, the longitudinal direction may be referred to as the front-back direction, and the width direction may be referred to as the left-right direction.

In addition, terms such as first and second used in the present disclosure may be used to describe various components. That is, terms such as first, second, etc. may be used only for the purpose of distinguishing one component from another component.

### BEST MODE

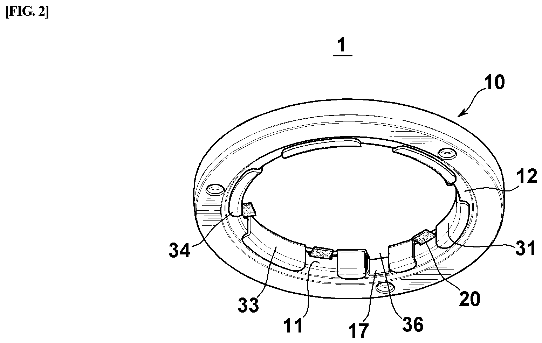

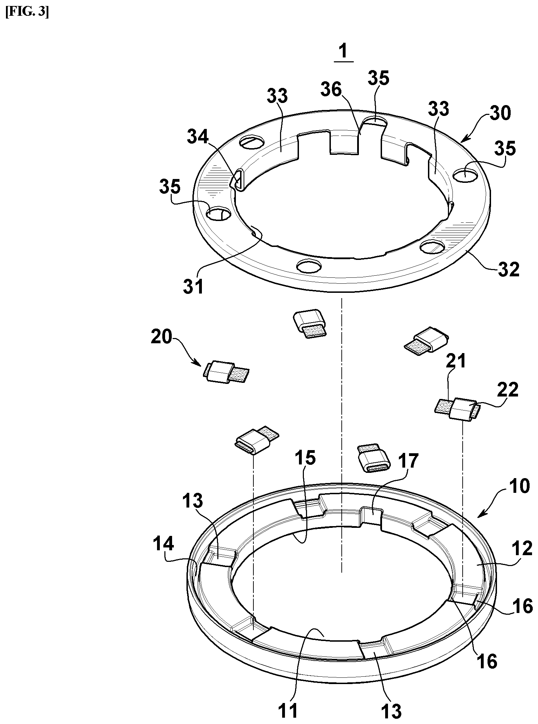

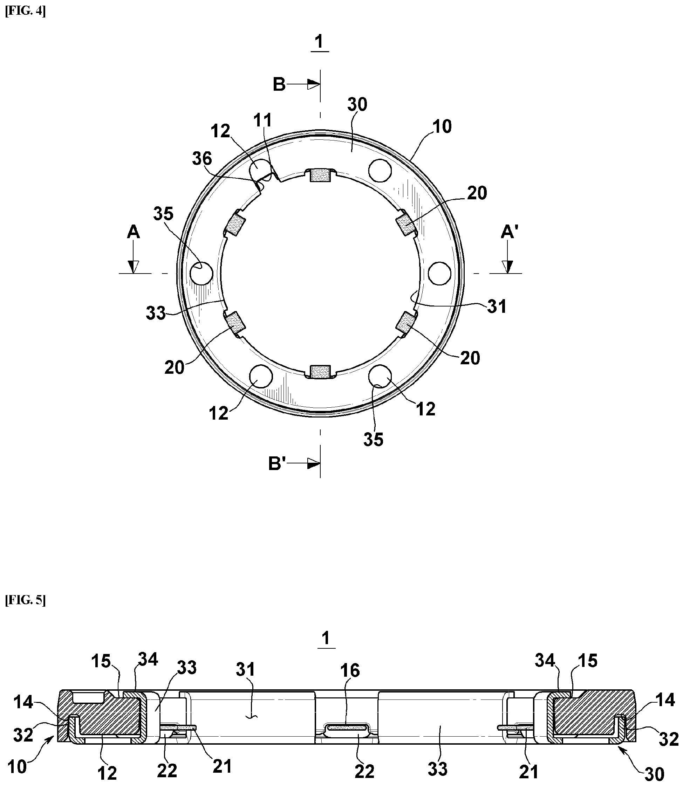

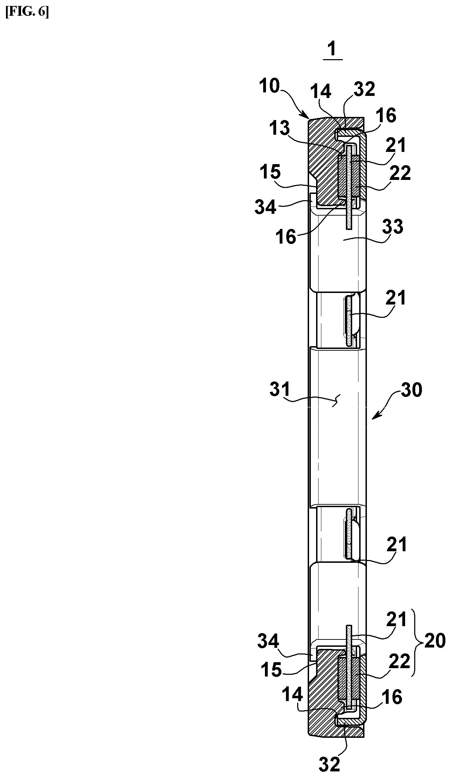

As shown in FIGS. 2 to 10, main components constituting a shaft grounding ring 1 according to an embodiment of the present disclosure include a housing 10, a grounding brush 20, and a cover 30.

The housing 10 is shaped like a ring to be inserted into the outer circumference of a motor shaft S of a driving motor to surround the motor shaft S of the driving motor, and is formed with a circular first through hole 11 in the center portion thereof through which the shaft S of the driving motor passes in the front-back direction.

A first coupling surface 12 is formed on the front inner edge of the housing 10, and a second coupling surface 15 is formed on the rear inner edge of the housing 10.

In addition, a narrow and long slot groove 14 is formed in a circular shape at the outer edge of the first coupling surface 12, and brush mounting grooves 13 are arranged radially on the first coupling surface 12.

For example, six brush mounting grooves 13 may be formed at an angle of 60 degrees along the circumferential direction of the housing 10, but the number is not limited thereto, and two or more brush mounting grooves 13 may be formed radially on the first coupling surface 12with equal spacing.

At the inner and outer edges of the brush mounting groove 15, locking protrusions 16 are respectively formed to protrude at the same height as the first coupling surface 12 to prevent the grounding brush 20 from being separated in the direction of gravity.

In addition, a positioning groove 17 is formed on one side of the inner surface edge of the housing 10, that is, the first through hole 11, to communicate with an open hole 36 of the cover 30.

At this time, the housing 10 is preferably made of a material with excellent electrical conductivity, corrosion resistance, and wear resistance, such as aluminum, copper, magnesium alloy, tungsten alloy, and stainless steel, in order to be grounded to the ground by means of a motor housing M of the driving motor.

A plurality of grounding brushes 20 are arranged radially in order to uniformly contact the outer circumference of the driving motor shaft S.

That is, the grounding brushes 20 are respectively inserted and mounted into the brush mounting grooves 13 of the housing 10.

One end of the grounding brush 20 is arranged to electrically contact the outer peripheral surface of the shaft S of the driving motor.

Meanwhile, the grounding brush 20 is made by neatly gathering several long, thin carbon fiber filaments 21, putting one ends of the filaments 21 into a crimp tube 22, compressing the filaments 21, and combining the filaments 21 into one, so that the carbon fiber filaments 21 are formed to have elasticity on their own. By doing so, wear and deformation caused by contact with the high-speed rotating driving motor shaft S may be minimized, vibration and noise may be prevented, and current density and grounding performance may be improved.

For example, the grounding brush 20 may be provided in the form of a brush made by neatly gathering several strands of carbon fiber filaments 21 with a diameter of about 5 to 100 µm, putting one ends of the filaments 21 into the crimp tube 22, pressing the filaments 21, and tying the filaments 21 together.

In this case, the crimp tube 22 is made of a material with excellent electrical conductivity such as aluminum or copper for grounding.

In particular, when the crimp tube 22 is made using oxygen-free high conductivity (OFHC) copper, grounding performance may be improved, and when the surface of the crimp tube 22 is treated with tin on a copper base, discoloration, oxidation, and corrosion may be prevented.

In addition, the inner circumferential surface of the crimp tube 22 may be filled with a conductive compound to prevent poor connection and increase electrical conductivity.

At this time, the grounding brush 20 is made by impregnating 12,000 to 24,000 carbon fiber filaments 21 with an epoxy resin adhesive and temporarily fixing the filaments 21 into one strand with a resistance of 5 to 40 µm and a diameter of 5 to 30 Ω, and then cutting the filaments 21 to a certain length. The grounding brush 20 may be installed between the housing 10 and the cover 30 and then dissolve the adhesive with a solvent to provide flexibility, thereby minimizing electrical resistance.

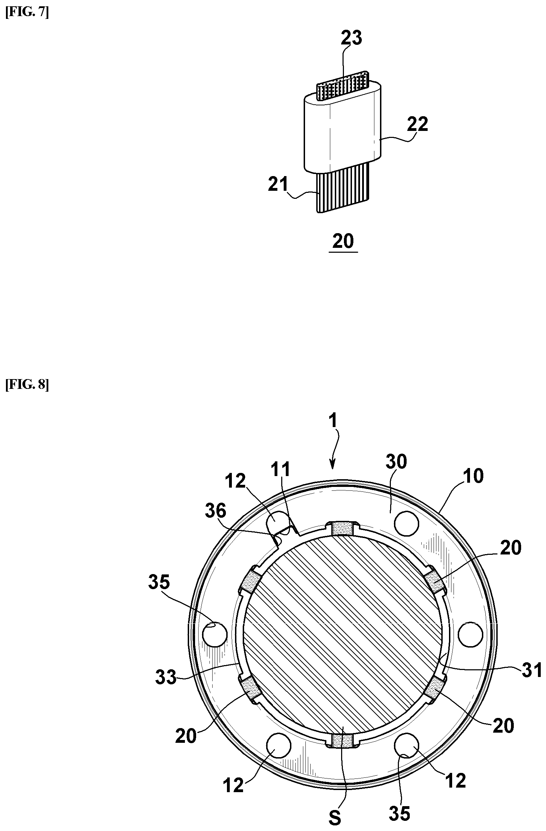

Meanwhile, as shown in FIG. 7, the carbon fiber filaments 21 of the grounding brush 20 may be formed with the length of the opposite part protruding shorter than the length of the part electrically contacting the outer circumferential surface of the driving motor shaft S, based on the crimp tube 22.

In addition, by applying a certain amount of bonding agent 23 of either epoxy resin or ultraviolet curable unsaturated polyester resin to one ends of the carbon fiber filaments 21 in the longitudinal direction, that is, to the ends of carbon fiber filaments located opposite to the part of the grounding brush that is in electrical contact with the outer circumferential surface of the driving motor shaft S, and curing the bonding agent 23, it is possible to prevent the carbon fiber filaments from easily falling out of the crimp tube 22 when the filaments contact the rotating driving motor shaft S.

In addition, by adding color to the bonding agent 23 by mixing colorants of various colors, the application and curing state of the bonding agent 23 may be easily checked during the process of inspecting defects in a product. Due to this, the defect rate may be reduced and the efficiency and productivity of the inspection work may be improved.

In this case, the components of a colorant mixed into the bonding agent 23 are not particularly limited, and any color that is used to check the application and curing state of the bonding agent 23 may be used without limitation. For example, the colorant may be a mixture of one or more selected from the group consisting of white carbon, titanium oxide, iron oxide, cadmium red, cadmium yellow, chrome yellow, titanium yellow, chromium oxide, ultramarine pigment, royal blue pigment, blue pigment, cobalt blue, cobalt purple and manganese pigment.

It is preferable to mix 0.1 to 7% by weight of the colorant based on the total weight of the bonding agent 23.

Furthermore, the colorant preferably has an average particle diameter of 1 nm to 10 µm. When the average particle diameter is smaller than 1 nm, there is a risk of aggregation within the bonding agent 23, and when the average particle diameter exceeds 10 µm, there is a risk of impairing the adhesiveness of the bonding agent 23.

The cover 30 is coupled to the housing 10 with the grounding brushes 20 interposed therebetween to prevent the grounding brushes 20 from being separated from the housing 10, and.

That is, the cover 30 is provided to surround the motor shaft S while fixing the grounding brushes 20 to the housing.

The cover 30 is shaped like a ring to fit on the outer circumference of the motor shaft S.

That is, a circular second through hole 31 is formed in the central portion of the cover 30, which communicates with the first through hole 11 in the front-back direction and through which the motor shaft S passes.

In addition, a shrink flange 32 is provided on the outer edge of the cover 30 to fit into the slot groove 14 of the housing 10.

On the inner circumference of the second through hole 31, first stretch flanges 33 inserted into the first through hole 11 of the housing 10 are arranged radially.

That is, the body of the cover 30 comes into close contact with the second coupling surface 15 of the housing 10 when coupled with the housing 10, the shrink flange 32 on the outer edge of the cover 30 is inserted into the slot groove 14 of the housing 10, and the first stretch flanges 33 on the inner edge of the cover 30 are formed to be inserted into the first through hole 11 of the housing 10.

In addition, a second stretch flange 34 is provided on the cover 30 to bend an end of the first stretch flange 33 that penetrates the first through hole 11 of the housing 10 outward to bring the first stretch flange 33 into close contact with the first coupling surface 12 of the housing 10.

That is, the second stretch flange 34 is formed by bending the end of the first stretch flange 33, which penetrates the first through hole 11 of the housing 10, outward by 90 degrees so as to come into close contact with the second coupling surface 15 of the housing 10 in order to combine the cover 30 and the housing 10.

In addition, the cover 30 has pin holes 35 radially arranged in the front-back direction so that a contact pin 41 of a pressing jig 40 penetrates and contacts the front surface of the housing 10, that is, the first coupling surface 12.

In addition, one of the pin holes 35 is integrally formed with the open hole 36 that extends from the center to the inner edge thereof.

That is, the open hole 36 is formed in a U-shape with an open inner edge so that a positioning protrusion 42, which determines the fastening position of the pressing jig 40, may be inserted.

In this case, the cover 30 is preferably made of the material housing 10, such as stainless steel, which has excellent electrical conductivity, corrosion resistance, and wear resistance, and of the magnetic material attracted by a magnet 44 of the pressing jig 40 in order to be grounded to the ground by means of the motor housing of the driving motor.

The shaft grounding ring 1 according to an embodiment of the present disclosure configured in this way may minimize the influence of the driving motor shaft's rotation speed, temperature, pressure, vibration, etc., as the carbon fiber grounding brushes 20 stably make surface contact around the motor shaft S, causing a uniform current distribution and providing a low impedance path to ground through the motor housing M of the driving motor, and may protect bearings by safely diverting shaft currents induced on the motor shaft S to ground.

In addition, the housing 10 and the cover 30 may be assembled and combined by pressing with the grounding brushes 20 in between.

That is, since the cover 30, the housing 10, and the grounding brushes 20 may be combined into one by inserting the grounding brushes 20 into the respective brush mounting grooves 13 of the housing 10, inserting the shrink flange 32 of the cover 30 into the slot groove 14 of the housing 10, and at the same time, and bending the second stretch flanges 34 of the cover 30 outward by 90 degrees so that the flanges 34 are in close contact with the second coupling surface 15 of the housing 10 after inserting the first stretch flange 33 into the first through hole 11 of the housing 10, assembly is simple and easy, and productivity may be improved.

Furthermore, the assembly state between members is maintained more firmly and stably, thereby preventing the grounding brushes 20 from freely moving or being separated from the housing 10.

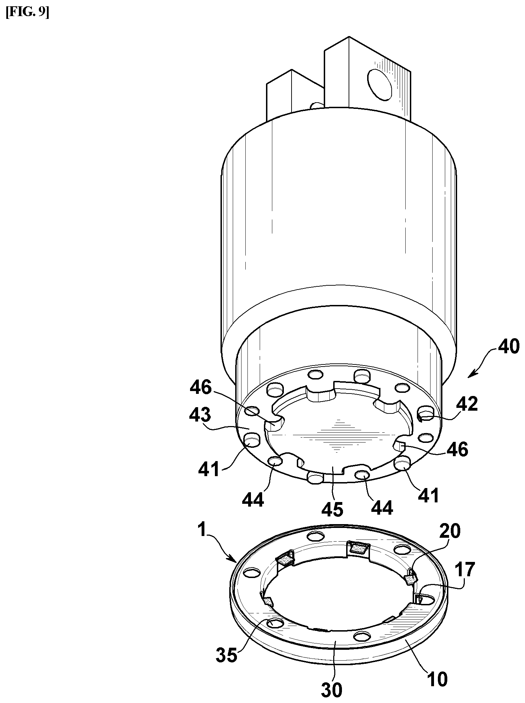

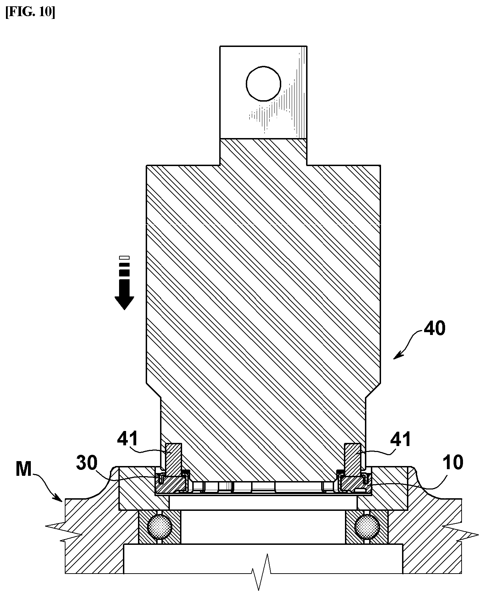

Meanwhile, as shown in FIGS. 9 and 10, the shaft grounding ring 1 according to an embodiment of the present disclosure may be mounted by press-fitting the shaft grounding ring 1 into the motor housing M of the driving motor using the pressing jig 40.

An attachment surface 43 having an outer diameter smaller than or equal to the outer diameter of the cover 30 is formed on the surface of the pressing jig 40 facing the front of the cover 30.

In addition, contact pins 41 that contact the front of the housing 10 through the pin holes 35 of the cover 30 protrude from the edge of the attachment surface 43 and are arranged radially at regular intervals.

That is, the contact pin 41 is formed to protrude higher than the depth of the pin hole 35 drilled in the cover 30 of the shaft grounding ring 1 from the attachment surface 43.

On one edge of the attachment surface 43, the positioning protrusion 42 is formed to protrude and contact the positioning groove 17 of the housing 10 through the pin hole 35 and the open hole 36 of the cover 30.

That is, the positioning protrusion 42 is formed integrally with one edge of one of the contact pins 41, protruding more than the height of the one of the contact pins 41.

In this case, six contact pins 41, for example, may be formed at an angle of 60 degrees along the circumferential direction of the attachment surface 43, and the positioning protrusion 42 may be formed to protrude from the front edge of any one of the six contact pins 41, but the number is not limited thereto, and several contact pins may be formed radially arranged on the attachment surface 43 with equal spacing.

Between the contact pins 41, the magnets 44 that magnetically attract the cover 30 are arranged to protrude lower than the protruding height of the contact pins 41.

In this case, six magnets 44, for example, may be formed at an angle of 60 degrees along the circumferential direction of the attachment surface 43, but the number is not limited thereto, and several magnets may be formed radially arranged on the attachment surface 43 with equal spacing.

In addition, it is desirable to use a permanent magnet such as a magnetic magnet or neodymium magnet with excellent heat resistance and corrosion resistance as the magnet 44.

A circular plate 45 configured to be inserted into the second through hole 31 of the cover 30 is formed to protrude at the center of the attachment surface 43, and on the edge of the circular plate 45, interference prevention grooves 46 are formed radially arranged to prevent contact interference with one part of the grounding brush 20 that is in electrical contact with the outer peripheral surface of the motor shaft S.

In the process of press-fitting the shaft grounding ring 1 into the mounting part of the motor housing M using the pressing jig 40, since the contact pins 41 penetrate the pin holes 35 of the cover 30 and contact the front of the housing 10, and the attachment surface 43 is maintained at a certain distance from the cover 30, the cover 30 is not pressed and force is applied only to the housing 10 by the contact pins 41, thereby preventing the carbon fiber grounding brushes 20 from being deformed and damaged.

In addition, since the positioning protrusion 42 of the pressing jig 40 is inserted only into the positioning groove 17 of the housing 10 through the open hole 36 of the cover 30, the fastening position and direction may be determined consistently.

Furthermore, the cover 30 made of magnetic material is naturally attracted by the magnets 44 of the pressing jig 40 and is quickly, accurately, and stably attached without shaking, making it easier and more stable to install on the mounting part of the motor housing M.

Meanwhile, the shaft grounding ring 1 according to an embodiment of the present disclosure may be attached and installed around the motor shaft S or the motor housing M by using various methods such as clip on, epoxy injection, bolt through, and mounting bracket installation.

Meanwhile, the present disclosure is not limited to the above-described embodiment and the attached drawings, and may be modified and applied in various ways not exemplified without departing from the technical spirit of the present disclosure. It is clear to those skilled in the art that the present disclosure may be broadly applied by replacing each component and changing the embodiment of the present disclosure to other equivalent embodiments.

Therefore, contents related to modifying and applying the technical features of the present disclosure should be construed as being included within the technical idea and scope of the present disclosure.

## Claims

1. A shaft grounding ring comprising:
an annular housing (10) having a first through hole (11) in a central portion thereof through which a motor shaft (S) passes in a front-back direction, and having brush mounting grooves (13) arranged radially on a front thereof;
a plurality of grounding brushes (20) respectively inserted into the brush mounting grooves (13) of the housing (10), and an elastic end of which is in electrical contact with an outer circumferential surface of the motor shaft (S); and
an annular cover (30) coupled to the housing (10) with the grounding brushes (20) in between to fix the grounding brushes (20), having a second through hole (31) in a central portion thereof in a front-back direction, which communicates with the first through hole (11) and through which the motor shaft (S) passes, and having radially arranged pin holes (35) drilled in the front-back direction so that contact pins (41) of a pressing jig (40) penetrate and contact the front of the housing (10).

2. The shaft grounding ring of claim 1, wherein one of the pin holes (35) of the cover (30) is integrally formed with an open hole that extends from a center to an end of an inner edge thereof so that a positioning protrusion (42) that determines a fastening position of the pressing jig (40) is inserted, and a positioning groove (17) is formed in the housing (10) to communicate with the open hole (36).

3. The shaft grounding ring of claim 1 or 2, wherein the housing (10) has a first coupling surface (12) on an inner edge of the front thereof, has a narrow and long slot groove (14) in a circular shape on an outer edge of the first coupling surface (12), has the brush mounting grooves (13) arranged radially on the first coupling surface (12), and has a second coupling surface (15) on an inner edge of a back thereof,
each of the grounding brushes (20) is made by neatly gathering several long, thin carbon fiber filaments (21), putting the filaments in a crimp tube (22), and pressing the filaments together, so that the grounding brushes (20) are elastic in themselves, and
the cover (30) has a shrink flange (32) on an outer edge thereof to fit into the slot groove (14), has first stretch flanges (33) inserted into the first through hole (11) of the housing (10) are arranged radially on an inner circumference of the second through hole (31), and has a second stretch flange (34) that bends an end of each of the first stretch flanges (33) that penetrate the first through hole (11) of the housing (10) outward to bring the first stretch flanges (33) into close contact with the first coupling surface (12) of the housing (10).

4. The shaft grounding ring of claim 3, wherein a bonding agent (23) of either epoxy resin or ultraviolet curable unsaturated polyester resin is applied to an end of the each of the grounding brushes (20) located opposite to a part of the each of the grounding brushes (20) that is in electrical contact with the outer circumferential surface of the motor shaft (S), and the bonding agent (23) is cured to prevent the carbon fiber filaments (21) from falling out of the crimp tube (22).

5. The shaft grounding ring of anyone of the claims 1 to 4, wherein in each of the brush mounting grooves (13) of the housing (10), a locking protrusion 16 is provided to prevent the grounding brushes 20 from being separated in a direction of gravity.

6. The shaft grounding ring of claim 3 or 4, wherein the carbon fiber filaments (21) are provided with a length of an opposite part protruding shorter than a length of a part electrically contacting the outer circumferential surface of the motor shaft (S), based on the crimp tube (22).

7. The shaft grounding ring of anyone of the claims 1 to 6, wherein the pressing jig (40) is provided with, on a surface thereof facing a front of the cover (30), an attachment surface (43) having an outer diameter smaller than or equal to an outer diameter of the cover (30), the contact pins (41) protrude from an edge of the attachment surface (43) and are arranged radially at regular intervals, and a magnet (44) that magnetically attracts the cover (30) is arranged between the contact pins (41) and protrudes lower than the contact pins (41),
wherein a circular plate (45) configured to be inserted into the second through hole (31) of the cover (30) protrudes at a center of the attachment surface (43), and on an edge of the circular plate (45), interference prevention grooves (46) are formed radially arranged to prevent contact interference with the grounding brushes (20).
